# EUROPEAN PATENT APPLICATION

(11) **EP 4 653 476 A1**
(43) Date of publication of application: **26.11.2025**
(21) Application number: 22900106.0
(22) Date of filing: 11.10.2022
(51) Int. Cl.: C08F 114/26, C08F 6/22, C08F 4/40, C08F 14/26

(54) **POLYTETRAFLUOROETHYLENE DISPERSION RESIN FOR DRY ELECTRODE BINDER AND PREPARATION METHOD THEREOF**

(30) Priority: 03.12.2021 CN 202111467393
(71) Applicant: Zhonghao Chenguang Research Institute of Chemical Industry Company Limited, Fushun Country Zigong, Sichuan 643201 (CN)
(72) Inventor: SU, Xiaolong, Zigong, Sichuan 643201 (CN); YAO, Quanwei, Zigong, Sichuan 643201 (CN); LIU, Bo, Zigong, Sichuan 643201 (CN); HUANG, Yuxiang, Zigong, Sichuan 643201 (CN); YANG, Fan, Zigong, Sichuan 643201 (CN); ZHAO, Fan, Zigong, Sichuan 643201 (CN); TANG, Yi, Zigong, Sichuan 643201 (CN)
(74) Representative: Geskes, Christoph
(86) International application number: PCT/CN2022/124639
(87) International publication number: WO 2023/098300

(57) **Abstract**

The present application relates to the field of polymer materials and specifically relates to a polytetrafluoroethylene dispersion resin for a dry electrode binder and a preparation method thereof. The polytetrafluoroethylene dispersion resin prepared by the method does not contain PFOA, the SSG is 2.150 to 2.160, the average particle size is 10 to 100 µm , has excellent fiber forming performance and a high fiber forming rate, and is not prone to wire breakage. When the electrode binder is used as a dry electrode binder, active carbon particles and conductive agent particles can be contacted more tightly in a fiber state, such that the electrode has the advantages of large density, excellent conductivity, high capacity, etc.

## Description

### Cross Reference

The present application claims priority to Chinese Patent Application No. 202111467393.3, filed on December 3, 2021, entitled "POLYTETRAFLUOROETHYLENE DISPERSION RESIN FOR DRY ELECTRODE BINDER AND PREPARATION METHOD THEREOF", the entire disclosure of which is incorporated herein by reference.

### Technical Field

The present application relates to the field of polymer materials, particularly to a polytetrafluoroethylene dispersion resin for a dry electrode binder and a preparation method thereof.

### Background Art

With the global energy shortage and increasing awareness of environmental protection, the development of new energy has currently become an important developing direction. Lithium-ion batteries, with the advantages of high working voltage, no memory effect, low self discharge, and long cycle life, have become a hot topic in the energy industry, and are widely used in industries of electronic devices such as mobile phones and computers. Meanwhile, Lithium-ion batteries are favored by some high-tech application fields such as military, aerospace, and electric vehicles. In traditional wet forming processes, solvents are used to form a binder layer with a binder. The entire particle of activated carbon is surrounded by the binder layer, which hinders the contacts between activated carbon particles and between activated carbon particles and conductive agent particles. The conductivity of the electrode is poor, and side reaction may occur between the residual solvent in the electrode and electrolyte, resulting in a decrease in super performance such as capacity reduction, gas generation, and lifespan decay.

CN111725477A relates to a preparation method of a dry electrode material for lithium-ion batteries. Graphene as a conductive agent is grown on the outer layer of active particles by chemical vapor deposition or electrostatic spraying. Then, polymer binder powder is wrapped around the active particles and graphene outer layer by electrostatic spraying method to form a uniformly mixed dry material. The obtained electrode material can directly realize the conductive path between active particles. This patent provides a brief introduction to the selection of the polymer binder powder, but does not describe its production process.

CN106654177A relates to a method for preparing a battery capacitor composite electrode by dry method. The electrode raw active materials A and B, a binder dry powder, and a conductive agent were fully mixed, heated to 550°C to 580°C in a nitrogen gas and/or argon atmosphere, and subjected to high-temperature calcination for 2 to 8 hours. The mixed composite electrode raw materials were extruded into a dry electrode film and rolled to obtain a battery capacitor composite electrode. The binder in the composite electrode material of this patent is one or more of SBR, CMC, PTFE and PVDF, but its production process is not described.

### Summary of the Application

The purpose of the present application is to provide a polytetrafluoroethylene dispersion resin for a dry electrode binder and a preparation method thereof.

In order to achieve the above purpose, the inventor attempted to use polytetrafluoroethylene dispersion resins provided in CN103665240A and CN107868162A (both of which are previous research achievements of the applicant), and found that they could not achieve the desired tightness degree of contacts between activated carbon particles and between activated carbon particles and conductive agent particles, resulting in a certain degree of damage to the conductivity and capacity retention of the electrode.

In this regard, the present application further studies and provides a preparation method of a polytetrafluoroethylene dispersion resin, comprising:
subjecting gas-phase tetrafluoroethylene monomers to polymerization reaction with an oxygen content of ≤ 30 ppm under a pressure of 2.0 to 3.0 Mpa, and at a temperature of 62°C to 70°C until a solid content of the reaction solution reaches 30 ± 3 wt%, to obtain a polytetrafluoroethylene polymerized solution; and
controlling the density of the polytetrafluoroethylene polymerized solution to 1.01 to 1.03 g/cm³, and then dosing and performing coagulation at 2°C to 6°C to obtain the polytetrafluoroethylene dispersion resin.

The present application has found that through the above method, it is advantageous to significantly reduce the average particle size of polytetrafluoroethylene dispersion resin and improve its fiber forming effect, thereby greatly improving its various effects (especially electrode conductivity) when used as a dry electrode binder.

In specific implementation, the density of polytetrafluoroethylene polymerized solution can be controlled within the above range by mixing it with deionized water.

Preferably, the dosing is specifically as follows: mixing polytetrafluoroethylene polymerized solution with an electrolyte in the amount of 2 wt% to 4 wt% of polytetrafluoroethylene dry materials.

Preferably, the coagulation is carried out at 1000 to 1300 r/min.

The initiator used in the polymerization can be persulfate, organic peroxide, or oxidation-reduction systems.

In the present application, preferably, the initiator is an oxidation-reduction system, wherein an oxidative initiator comprises but not limited to alkali metal persulfate, potassium permanganate, potassium bromate, or potassium chlorate, and a reductive initiator comprises but not limited to ferrous ions, sulfites, or oxalic acid.

As a preferred solution, the oxidative initiator is potassium bromate, and the reductive initiator is sodium sulfite. The oxidation-reduction initiation system under this combination is further beneficial for ensuring the continuous and effective progress of the polymerization reaction, allowing the reaction rate to steadily become fast without the phenomenon of sudden acceleration and deceleration.

More preferably, a usage amount of the oxidative initiator is 0.0003% to 0.001% of the weight of the reaction medium (such as deionized water), further preferably 0.0004% to 0.0009%; a usage amount of the reductive initiator is 0.0012% to 0.004% of the weight of the reaction medium (such as deionized water), further preferably 0.0015% to 0.0025%.

Preferably, the oxidative initiator is added to the polymerization system before starting the polymerization reaction. During the polymerization, the reductive initiator is added to the polymerization system in batches successively according to a weight ratio of 1 : (3-5);
wherein, a concentration of a first batch of reductive initiator is 0.2 ± 0.05 g/L, and the first batch of reductive initiator is added all at once after the gas-phase tetrafluoroethylene monomers are first introduced until the pressure inside the reaction vessel reaches 2.0 to 3.0 Mpa;
a concentration of a second batch of reductive initiator is 0.1 ± 0.02 g/L, and the second batch of reductive initiator is continuously dropwise-added during the reaction process, and the addition is stopped after the feeding amount of the gas-phase tetrafluoroethylene monomers reaches 70 wt% to 80 wt% of the monomer feed amount.

The present application has further found that adding the reductive initiator in the above manner is beneficial for further improving the fibrous formation degree of polytetrafluoroethylene dispersion resin and increasing its generation rate.

Preferably, before the addition of the second batch of reductive initiator is stopped, the temperature of the polymerization reaction is controlled at 62°C to 66°C, and the maximum temperature difference throughout the process does not exceed 2°C; after the addition of the second batch of reductive initiator is stopped, the temperature of the polymerization reaction is controlled at ≤ 70°C.

After controlling the temperature in the above manner, it is beneficial to increase the molecular weight of the polymer while making the molecular weight distribution range of the polymer narrower and uniform, and further improving the fiber forming and wrapping properties of polytetrafluoroethylene dispersion resin.

Preferably, the raw materials used in the preparation of the polytetrafluoroethylene polymerized solution further comprise a dispersant, which is one or more selected from perfluoropolyether carboxylate, fluorine-containing polyether carboxylate, perfluoroalkyl sulfonate, and fluorine-containing alkyl sulfonate.

The usage amount of the dispersant is 0.01% to 0.15% of the mass of the reaction medium, preferably 0.05% to 0.1%.

All of the dispersant can be added to the polymerization system before starting the polymerization reaction.

More preferably, the dispersant is added to the polymerization system in batches successively according to a weight ratio of 1 : (4-6); a first batch of dispersant is added to the polymerization system before starting the polymerization reaction, a second batch of dispersant is added when the feeding amount of the gas-phase tetrafluoroethylene monomers reaches 15 wt% to 25 wt% of the monomer feed amount, and the concentration of the second batch of dispersant is 15 to 25 g/L. Adding the dispersant in this manner will further help reduce the average particle size of polytetrafluoroethylene dispersion resin.

Preferably, the polymerization is carried out at 30 to 50 r/min. At this stirring speed, it is not easy to generate high shear force that can damage the micelle morphology, in addition, it can increase the solubility of tetrafluoroethylene, promote the micronization and homogeneous distribution of bubbles, and reduce the amount of initiator used.

The raw materials used in the preparation of the polytetrafluoroethylene polymerized solution further comprise deionized water, antisticking agent, and stabilizer, all of which are added to the polymerization system before starting the polymerization reaction.

Preferably, the deionized water has a resistivity of above 16 megaohms (i.e. high-purity deionized water); more preferably, the amount of the deionized water is 50% to 70% of the volume of the reaction vessel, further preferably 60% to 70%.

Preferably, the stabilizer is solid paraffin or saturated hydrocarbon with a number of carbon atoms of ≥ 12; more preferably, the amount of the stabilizer is 1.0% to 8.0% of the mass of deionized water, further preferably 3.0% to 6.0%.

Preferably, the antisticking agent is succinic acid; more preferably, the amount of the antisticking agent is 0.003% to 0.015% of the mass of deionized water, further preferably 0.006% to 0.009%.

Preferably, the pH value of the polymerization system is controlled at 5 to 6.

In specific implementation, the aforementioned pH conditions can be achieved by adding a pH regulator to the reaction system, for example, a hydrochloric acid solution in the amount of 0.01% to 0.03% of the mass of deionized water is added to the reaction system, wherein the mass concentration of the hydrochloric acid solution is 36% to 38%.

In specific implementation, a biaxially symmetric reaction vessel can be selected as the reaction device.

According to convention, in specific implementation, the preparation method further comprises the steps of washing the coagulated product and drying, which are not particularly limited here.

A person skilled in the art can combine the above solutions to obtain preferred embodiments of the preparation method of the present application.

As a preferred embodiment, the preparation method specifically comprises:
deionized water, an oxidative initiator, a dispersant, an antisticking agent, and a stabilizer were added to a reaction vessel, the pH value of the reaction system was adjusted to 5 to 6, the oxygen content in the reaction vessel was controlled to ≤ 30 ppm, gas-phase tetrafluoroethylene monomers were added until the pressure inside the reaction vessel reaches 2.0 to 3.0 Mpa, then a first batch of a reductive initiator was added, polymerization reaction was performed at 62°C to 66°C and 30 to 50 rpm, wherein the maximum temperature difference throughout the process was controlled to be not greater than 2°C, and gas-phase tetrafluoroethylene monomers were continuously added during the reaction process to maintain the pressure inside the reaction vessel at 2.0 to 3.0 Mpa, meanwhile, a second batch of a reductive initiator was continuously dropwise-added, the addition of the reductive initiator was stopped after the feeding amount of the gas-phase tetrafluoroethylene monomers reached 70 wt% to 80 wt% of the monomer feed amount, then the temperature of the polymerization reaction was controlled to ≤ 70°C, the polymerization reaction was terminated when the solid content of the reaction solution reached 30 ± 3 wt%, and the polytetrafluoroethylene polymerized solution was collected;
the density of the polytetrafluoroethylene polymerized solution was controlled to 1.01 to 1.03 g/cm³, and then the polytetrafluoroethylene polymerized solution was mixed with an electrolyte in the amount of 2 wt% to 4 wt% of polytetrafluoroethylene dry materials at 2°C to 6°C and subjected to coagulation to obtain polytetrafluoroethylene dispersion resin.

As a further preferred embodiment, in the above preparation method, the dispersant was added to the polymerization system in batches successively according to a weight ratio of 1 : (4-6); the first batch of dispersant was added to the polymerization system before starting the polymerization reaction, and the second batch of dispersant was added when the feeding amount of the gas-phase tetrafluoroethylene monomers reached 15 wt% to 25 wt% of the monomer feed amount, wherein the concentration of the second batch of dispersant was 15 to 25 g/L.

Furthermore, the present application also provides a polytetrafluoroethylene dispersion resin, which is prepared by the aforementioned preparation method.

Furthermore, the present application also provides the use of the polytetrafluoroethylene dispersion resin as a dry electrode binder.

Preferably, based on the total mass of the electrode material, the usage amount of the polytetrafluoroethylene dispersion resin is 3 wt% to 5 wt%.

When the polytetrafluoroethylene dispersion resin is specifically used to prepare a solvent-free dry electrode sheet, it can be uniformly dispersed with other electrode materials by high-speed airflow shearing, and the dry mixed powder is hot rolled to obtain a self-supporting electrode film. The electrode film is placed on a carbon-coated aluminum foil and subjected to upper and lower hot-rolling and heat curing, such that the electrode film firmly attached to the current collector, to obtain a solvent-free dry electrode sheet.

Based on the above technical solution, the beneficial effects of the present application are as follows:
The polytetrafluoroethylene dispersion resin of the present application does not contain PFOA, has an SSG of 2.150 to 2.160 and an average particle size of 10 to 100 µm, has good fiber forming effect, high fiber forming rate, and is not easily broken. When used as a dry electrode binder, the polytetrafluoroethylene dispersion resin exists in a fibrous state, which can make the contact between activated carbon particles and between activated carbon particles and conductive agent particles tighter, thereby allowing the electrode to have advantages such as high density, good conductivity, and high capacity.

### Specific Modes for Carrying Out the Embodiments

The following Examples are used to illustrate the present application, but not to limit the scope of the present application.

If specific technology or conditions are not specified in the Examples, follow the technology or conditions described in the literatures in this field, or follow the product manual. The reagents or instruments used without specifying the manufacturer are conventional products that can be purchased through legitimate channels.

### Example 1

The present Example provides a polytetrafluoroethylene dispersion resin, the preparation process of which was as follows:
A 50 L stainless steel reaction vessel was used and washed, after 32 L of high-purity deionized water (with a resistivity of 16 megaohms), 0.15 g of potassium bromate as an oxidative initiator, 2 g of succinic acid as an antisticking agent, 8 g of fluorine-containing polyether carboxylate as a dispersant, 5 ml of hydrochloric acid solution as a pH regulator (purchased from Chuandong, Chongqing, with a concentration of 36 wt% to 38 wt%), and 2 kg of solid paraffin as a stabilizer were added, the vessel was sealed, evacuated, and subjected to nitrogen gas replacement. The oxygen content was analyzed and considered to be qualified when the oxygen content was ≤ 30 ppm. After the oxygen content was analyzed to be qualified, the reaction vessel was subjected to temperature rise until 60°C ± 1°C, gas-phase monomer tetrafluoroethylene was added until the pressure inside the vessel reached 2.5 MPa, 0.1 g of sodium sulfite as a reductive initiator (dissolved in 0.5 L of high-purity deionized water) was added through a metering pump, and 4 L of sodium sulfite solution with a concentration of 0.1 g/L (0.4 g of sodium sulfite dissolved in 4 L of high-purity deionized water) was continuously dropwise-added through another metering pump. The pressure inside the vessel was maintained at 2.5 MPa, and the reaction temperature was 65 ± 1°C during the reaction period. According to the change in polymerization reaction rate, the addition rate of the reductive initiator was controlled and the reductive initiator was appropriately replenished. When the feeding amount of tetrafluoroethylene reached 3 Kg, 2 L of remaining water solution containing 42 g of dispersant was continuously added to the polymerization system. When the feeding amount of tetrafluoroethylene reached 11.5 Kg, the addition of the reductive initiator was stopped, and the final reaction temperature was controlled to ≤ 70°C. When the feeding amount of tetrafluoroethylene reached 15 Kg (with a solid content of about 30%), the reaction was terminated, the gas-phase monomers were recovered, materials were cooled down for discharging, and paraffin was separated to obtain a polytetrafluoroethylene polymerized solution.

The polymerized solution and low-temperature high-purity deionized water were added into a 50 L high-efficiency sealed coagulation bucket to prepare a coagulation mother liquor with a density of 1.02 g/cm³ and a temperature of 3°C. An electrolyte in the amount of 3% of polytetrafluoroethylene dry materials was added, and the resultant was subjected to coagulation at a stirring speed of 1100 r/min, followed by washing and drying to obtain a polytetrafluoroethylene dispersion resin.

### Example 2

The present Example provides a polytetrafluoroethylene dispersion resin, the preparation process of which was as follows:
A 50 L stainless steel reaction vessel was used and washed, after 32 L of high-purity deionized water (with a resistivity of 16 megaohms), 0.15 g of potassium bromate as an oxidative initiator, 2 g of succinic acid as an antisticking agent, 50 g of fluorine-containing polyether carboxylate as a dispersant, 5 ml of hydrochloric acid as a pH regulator (purchased from Chuandong, Chongqing, with a concentration of 36 wt% to 38 wt%), and 2 kg of solid paraffin as a stabilizer were added, the vessel was sealed, evacuated, and subjected to nitrogen gas replacement. The oxygen content was analyzed and considered to be qualified when the oxygen content was ≤ 30 ppm. After the oxygen content was analyzed to be qualified, the reaction vessel was subjected to temperature rise until 60°C ± 1°C, gas-phase monomer tetrafluoroethylene was added until the pressure inside the vessel reached 2.5 MPa, 0.1 g of sodium sulfite as a reductive initiator (dissolved in 0.5 L of high-purity deionized water) was added through a metering pump, and 4 L of sodium sulfite solution with a concentration of 0.1 g/L (0.4 g of sodium sulfite dissolved in 4 L of high-purity deionized water) was continuously dropwise-added through another metering pump. The pressure inside the vessel was maintained at 2.5 MPa, and the reaction temperature was 65 ± 1°C during the reaction period. According to the change in polymerization reaction rate, the addition rate of the reductive initiator was controlled and the reductive initiator was appropriately replenished. When the feeding amount of tetrafluoroethylene reached 3 Kg, 2 L of remaining water solution containing 42 g of dispersant was continuously added to the polymerization system. When the feeding amount of tetrafluoroethylene reached 11.5 Kg, the addition of the reductive initiator was stopped, and the final reaction temperature was controlled to ≤ 70°C. When the feeding amount of tetrafluoroethylene reached 15 Kg (with a solid content of about 30%), the reaction was terminated, the gas-phase monomers were recovered, materials were cooled down for discharging, and paraffin was separated to obtain a polytetrafluoroethylene polymerized solution.

The polymerized solution and low-temperature high-purity deionized water were added into a 50 L high-efficiency sealed coagulation bucket to prepare a coagulation mother liquor with a density of 1.03 g/cm³ and a temperature of 5°C. An electrolyte in the amount of 3% of polytetrafluoroethylene dry materials was added, and the resultant was subjected to coagulation at a stirring speed of 1100 r/min. After subjecting to coagulation, washing and drying, a polytetrafluoroethylene dispersion resin was obtained.

### Comparative Example 1

The present Comparative Example provides a polytetrafluoroethylene dispersion resin, and its preparation process is the same as that of Example 1 only except that the coagulation temperature was adjusted to 18°C.

### Comparative Example 2

The present Comparative Example provides a polytetrafluoroethylene dispersion resin, and its preparation process is the same as that of Example 1 only except that the density of the coagulation mother liquor was adjusted to 1.06 g/cm³.

### Comparative Example 3

The present Comparative Example provides a polytetrafluoroethylene dispersion resin prepared according to Example 1 disclosed in CN103665240A.

### Comparative Example 4

The present Comparative Example provides a polytetrafluoroethylene dispersion resin prepared according to Example 1 disclosed in CN107868162A.

### Experimental Example

The performances of the polytetrafluoroethylene dispersion resin in the Examples and Comparative Examples were tested using conventional methods in this field, and the test results are shown in Table 1.

**Table 1: Performance Test Data**

| | Average particle size µm | SSG | Fracture elongation % | Mixing uniformity | Fibrous formation wrapping ability |
|---|---|---|---|---|---|
| Example 1 | 25 | 2.152 | 660 | Good | Good |
| Example 2 | 40 | 2.154 | 630 | Good | Good |
| Comparative Example 1 | 262 | 2.154 | 540 | Poor | Fairly good |
| Comparative Example 2 | 296 | 2.153 | 520 | Poor | Fairly good |
| Comparative Example 3 | 514 | 2.168 | 340 | Poor | Poor |
| Comparative Example 4 | 575 | 2.141 | 420 | Poor | Poor |

The polytetrafluoroethylene dispersion resin prepared by the method of the present application in the amount of 3 wt% to 5 wt% of the total mass of electrode materials was uniformly dispersed with other conventional electrode materials (comprising electrode active materials, conductive carbon additives, solid electrolytes, etc.) by high-speed airflow shearing, and the dry mixed powder was hot rolled to obtain a self-supporting electrode film. The electrode film was placed on a carbon-coated aluminum foil and subjected to upper and lower hot-rolling and heat curing, such that the electrode film firmly attached to the current collector, to obtain a solvent-free dry electrode sheet. Then, this dry electrode sheet was used to make a pouch cell. After testing, the produced pouch cell has a capacity retention ratio of over 94% after 500 cycles of charging and discharging, which is about 4 to 5 percentage points higher than traditional wet electrodes.

Although the present application has been described in detail with general explanations and specific embodiments in the preceding text, some modifications or improvements can be made based on the present application, which is obvious to a person skilled in the art. Therefore, all these modifications or improvements made without departing from the spirit of the present application are within the scope of protection claimed by the present application.

### Industrial applicability

The present application provides a polytetrafluoroethylene dispersion resin for a dry electrode binder and a preparation method thereof. The polytetrafluoroethylene dispersion resin prepared by the method of the present application does not contain PFOA, with an SSG of 2.150 to 2.160 and an average particle size of 10 to 100 µm. It has good fiber forming effect, high fiber forming rate, and is not easily broken. When used as a dry electrode binder, it exists in a fibrous state, which can make the contact between activated carbon particles and between activated carbon particles and conductive agent particles tighter, thereby allowing the electrode to have advantages such as high density, good conductivity, and high capacity, with good economic value and application prospects.

## Claims

1. A preparation method of a polytetrafluoroethylene dispersion resin, wherein the preparation method comprises:
subjecting gas-phase tetrafluoroethylene monomers to polymerization reaction with an oxygen content of ≤ 30 ppm under a pressure of 2.0 to 3.0 Mpa, and at a temperature of 62°C to 70°C until a solid content of the reaction solution reaches 30 ± 3 wt%, to obtain a polytetrafluoroethylene polymerized solution; and
controlling the density of the polytetrafluoroethylene polymerized solution to 1.01 to 1.03 g/cm³, and then dosing and performing coagulation at 2°C to 6°C to obtain the polytetrafluoroethylene dispersion resin.

2. The preparation method according to claim 1, wherein the dosing is specifically as follows: mixing polytetrafluoroethylene polymerized solution with an electrolyte in the amount of 2 wt% to 4 wt% of polytetrafluoroethylene dry materials; preferably, the coagulation is carried out at 1000 to 1300 r/min.

3. The preparation method according to claim 1 or 2, wherein raw materials used in the preparation of the polytetrafluoroethylene polymerized solution further comprise an initiator, which is an oxidation-reduction system;
wherein an oxidative initiator comprises alkali metal persulfate, potassium permanganate, potassium bromate or potassium chlorate, and a reductive initiator comprises but not limited to ferrous ions, sulfites or oxalic acid;
a usage amount of the oxidative initiator is 0.0003% to 0.001% of the weight of the reaction medium, and the oxidative initiator is added to the polymerization system before starting the polymerization reaction;
a usage amount of the reductive initiator is 0.0012% to 0.004% of the weight of the reaction medium, and the reductive initiator is added to the polymerization system in batches successively according to a weight ratio of 1 : (3-5); a concentration of a first batch of the reductive initiator is 0.2 ± 0.05 g/L, and the first batch of reductive initiator is added all at once after the gas-phase tetrafluoroethylene monomers are first introduced and the pressure inside the reaction vessel reaches 2.0 to 3.0 Mpa; a concentration of a second batch of the reductive initiator is 0.1 ± 0.02 g/L, and the second batch of reductive initiator is continuously dropwise-added during the reaction process, and the addition is stopped after the feeding amount of the gas-phase tetrafluoroethylene monomers reaches 70 wt% to 80 wt% of the monomer feed amount.

4. The preparation method according to claim 3, wherein before the addition of the second batch of reductive initiator is stopped, the temperature of the polymerization reaction is controlled at 62°C to 66°C, and the maximum temperature difference throughout the process does not exceed 2°C; after the addition of the second batch of reductive initiator is stopped, the temperature of the polymerization reaction is controlled at ≤ 70°C.

5. The preparation method according to any one of claims 1 to 4, wherein the raw materials used in the preparation of the polytetrafluoroethylene polymerized solution further comprise a dispersant, which is one or more selected from perfluoropolyether carboxylate, fluorine-containing polyether carboxylate, perfluoroalkyl sulfonate, and fluorine-containing alkyl sulfonate;
a usage amount of the dispersant is 0.01% to 0.15% of the mass of the reaction medium; the dispersant is added to the polymerization system in batches successively according to a weight ratio of 1 : (4-6); a first batch of dispersant is added to the polymerization system before starting the polymerization reaction, a second batch of dispersant is added when the feeding amount of the gas-phase tetrafluoroethylene monomers reaches 15 wt% to 25 wt% of the monomer feed amount, and a concentration of the second batch of dispersant is 15 to 25 g/L.

6. The preparation method according to any one of claims 1 to 5, wherein the polymerization is performed at 30 to 50 r/min.

7. The preparation method according to any one of claims 1 to 6, wherein the raw materials used in the preparation of the polytetrafluoroethylene polymerized solution further comprise deionized water, antisticking agent, and stabilizer, all of which are added to the polymerization system before starting the polymerization reaction;
wherein the deionized water has a resistivity of above 16 megaohms, the stabilizer is solid paraffin or a saturated hydrocarbon with a number of carbon atoms of ≥ 12, and the antisticking agent is succinic acid;
preferably, an amount of the deionized water is 50% to 70% of the volume of the reaction vessel, preferably, an amount of the stabilizer is 1.0% to 8.0% of the mass of deionized water, and an amount of the antisticking agent is 0.003% to 0.015% of the mass of deionized water.

8. The preparation method according to any one of claims 1 to 7, wherein the pH value of the polymerization system is controlled at 5 to 6.

9. A polytetrafluoroethylene dispersion resin, wherein the polytetrafluoroethylene dispersion resin is prepared by the preparation method according to any one of claims 1 to 8.

10. Use of the polytetrafluoroethylene dispersion resin according to claim 9 as a dry electrode binder; preferably, based on the total mass of the electrode material, a usage amount of the polytetrafluoroethylene dispersion resin is 3 wt% to 5 wt%.
